(19) European Patent Office / Europäisches Patentamt / Office européen des brevets

(11) **EP 4 317 199 A1**

(12) **EUROPEAN PATENT APPLICATION**
published in accordance with Art. 153(4) EPC


(43) Date of publication:
**07.02.2024 Bulletin 2024/06**

(21) Application number: **22795860.0**

(22) Date of filing: **27.04.2022**

(51) International Patent Classification (IPC):
***C08F 2/50*** (2006.01) ***B29C 64/124*** (2017.01)
***B29C 64/264*** (2017.01) ***B33Y 10/00*** (2015.01)
***B33Y 70/00*** (2020.01) ***C08F 2/44*** (2006.01)
***C08F 290/06*** (2006.01) ***C08G 18/64*** (2006.01)
***C08L 101/00*** (2006.01)

(52) Cooperative Patent Classification (CPC):
**B29C 64/124; B29C 64/264; B33Y 10/00; B33Y 70/00; C08F 2/44; C08F 2/50; C08F 290/06; C08G 18/64; C08L 101/00**

(86) International application number:
**PCT/JP2022/019129**

(87) International publication number:
**WO 2022/230947 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2021 JP 2021078053**



(71) Applicant: **Denka Company Limited**
**Tokyo 103-8338 (JP)**

(72) Inventors:
- **BABA, Takumi**
**Tokyo 103-8338 (JP)**
- **YOSHIDA, Jun**
**Tokyo 103-8338 (JP)**
- **DOMOTO, Takashi**
**Tokyo 103-8338 (JP)**

(74) Representative: **Gulde & Partner**
**Patent- und Rechtsanwaltskanzlei mbB**
**Wallstraße 58/59**
**10179 Berlin (DE)**


(54) **PHOTOCURABLE RESIN COMPOSITION, PHOTOCURED ARTICLE, AND METHOD FOR PRODUCING THREE-DIMENSIONAL MOLDED ARTICLE**


(57) A photocurable resin composition for three-dimensional modeling capable of suppressing the formation of a non-designed hardened area on the opposite side of the light irradiation surface of the modeled object is provided.

According to the present invention, a photocurable resin composition, comprising a polymerizable organic compound component and a photopolymerization initiator is provided,
wherein a light transmittance at a wavelength of 405 nm of a cured product with an average thickness of 100 μm is 24% or less, and the cured product is cured by irradiating the photocurable resin composition with a light having a light intensity of 1.7 mW/cm$^2$ and an irradiation amount of 7.65 mJ/cm$^2$.


Fig. 1A

Fig. 1B

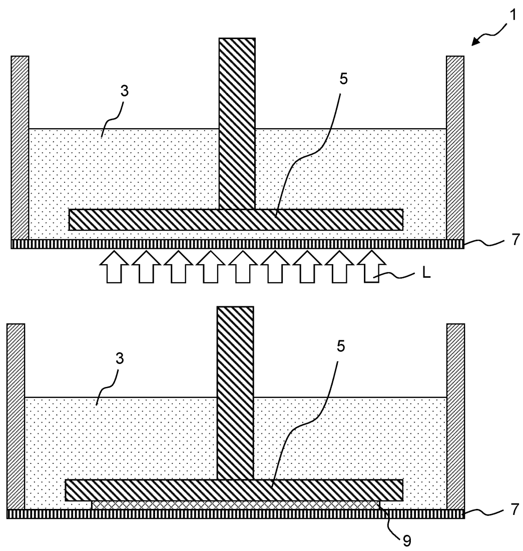





EP 4 317 199 A1

Fig. 1C

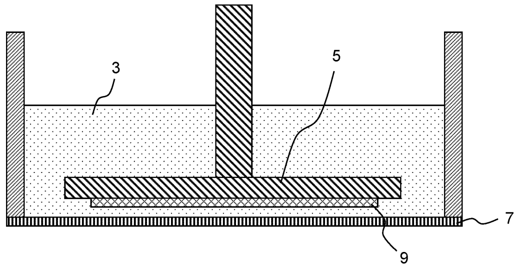

## Description

### Technical Field

The present invention relates to a photocurable resin composition, a photocured product, and a method for producing a three-dimensional modeled object.

### Background Art

In recent years, a technique for producing a three-dimensional modeled object by laminate modeling has been developed. A three-dimensional model made of a resin material is modeled by irradiating a photocurable composition with light.
As a photocurable composition, various component compositions have been studied in consideration of the characteristics of the obtained three-dimensional modeled object, and an example using a composition containing a (meth) acrylic acid ester has also been reported (Patent Literature 1).

Citation List

### Patent Literature

Patent Literature 1:JP2017-210539A

### Summary of Invention

### Technical Problem

However, modeling accuracy is a practical problem, and there is a demand for improving the modeling accuracy.
The present invention has been made in view of such a problem and provides a photocurable resin composition for three-dimensional modeling capable of suppressing the formation of a non-designed hardened area on the opposite side of the light irradiation surface of the modeled object.

### Solution to Problem

According to the present invention, a photocurable resin composition, comprising a polymerizable organic compound component and a photopolymerization initiator is provided,
wherein a light transmittance at a wavelength of 405 nm of a cured product with an average thickness of 100 μm is 24% or less, and the cured product is cured by irradiating the photocurable resin composition with a light having a light intensity of 1.7 $mW/cm^2$ and an irradiation amount of 7.65 $mJ/cm^2$.
The inventors have conducted an intensive study and have found that when the transmittance is within a specified range for a specific wavelength, it is possible to suppress the formation of the non-designed hardened area on the opposite side of the light irradiation surface of the modeled object and have completed the present invention.
Further, according to another aspect of the present invention, a photocured product of the above photocurable rein composition is provided.
Further, according to another aspect of the present invention, a method for producing a three-dimensional modeled object, comprising a step of irradiating the above photocurable resin composition is provided.
Various embodiments of the present invention will be described below. The embodiments shown below can be combined with each other.

(1) A photocurable resin composition, comprising a polymerizable organic compound component and a photopolymerization initiator,
wherein a light transmittance at a wavelength of 405 nm of a cured product with an average thickness of 100 μm is 24% or less, and the cured product is cured by irradiating the photocurable resin composition with a light having a light intensity of 1.7 $mW/cm^2$ and an irradiation amount of 7.65 $mJ/cm^2$.
(2) The photocurable resin composition of (1), wherein the polymerizable organic compound component comprises:

at least one selected from a group of a monofunctional (meth) acrylic acid ester monomer and a monofunctional (meth) acrylamide-based monomer; and
a polyfunctional (meth) acrylic acid ester monomer.

(3) The photocurable resin composition of (2), wherein a content of the polyfunctional (meth) acrylic acid ester monomer is 6 to 50% by mass in 100% by mass of the polymerizable organic compound component.
(4) The photocurable resin composition of (2) or (3), wherein the monofunctional (meth) acrylic acid ester monomer contains a monofunctional (meth) acrylic acid ester monomer having a first cyclic structure.
(5) The photocurable resin composition of any one of (2) to (4), wherein the monofunctional (meth) acrylamide-based monomer contains a monofunctional (meth) acrylamide-based monomer having a second cyclic structure.
(6) The photocurable resin composition of any one of (2) to (5), wherein the polyfunctional (meth) acrylic acid ester monomer contains a polyfunctional (meth) acrylic acid ester monomer having a third cyclic structure.
(7) The photocurable resin composition of (2) or (3),
wherein:

the monofunctional (meth) acrylic acid ester monomer contains a monofunctional (meth) acrylic acid ester monomer having a first cyclic structure,
the monofunctional (meth) acrylamide-based monomer contains monofunctional (meth) acrylamide-based monomer having a second cyclic structure,
the polyfunctional (meth) acrylic acid ester monomer contains the polyfunctional (meth) acrylic acid ester monomer having a third cyclic structure.

(8) The photocurable resin composition of any one of (1) to (7), which contains a urethane (meth) acrylate oligomer.
(9) The photocurable resin composition of any one of (1) to (8), which contains a dye.
(10) The photocurable resin composition of (9), wherein the dye is an organic dye.(11) The photocurable resin composition of (9) or (10), wherein the organic dye has a fourth cyclic structure.
(12) The photocurable resin composition of (11), wherein the fourth cyclic structure does not contain a nitrogen atom.
(13) The photocured product of the photocurable resin of any one of (1) to (12).
(14) A method for producing a three-dimensional modeled object, comprising a step of irradiating the photocurable resin composition of any one of (1) to (12) with a light.

## Brief Description of the Drawings

Fig. 1A to 1C are schematic diagrams of a method for producing a three-dimensional modeled object according to one embodiment of the present invention.
Fig. 2 is a schematic diagram showing a whole evaluation model M1.
Fig. 3A is an enlarged view of a part of the evaluation model M1 viewed from a direction perpendicular to the modeling direction. Fig. 3B is a cross-sectional view taken along line B-B in Fig. 3A.
Fig. 4 is a figure explaining the modeled object 11 and the non-designed hardened area 13 which occurs in the modeled object.

## Description of Embodiments

The embodiments of the present invention will be described below. The features shown in the embodiments shown below can be combined with each other. In addition, the invention is established independently for each feature.
In the present specification, the symbol "- (to)" means "greater than or equal to" and "less than or equal to", and for example, the description "A-B (A to B)" means more than or equal to A and less than or equal to B.

1. photocurable resin composition

The photocurable resin composition according to one embodiment of the present invention contains a polymerizable organic compound component and a photopolymerization initiator.

<Polymerizable organic compound component>

The polymerizable organic compound component preferably comprises:

at least one selected from the group of a monofunctional (meth) acrylic acid ester monomer and a monofunctional (meth) acrylamide-based monomer; and
a polyfunctional (meth) acrylic acid ester monomer.

The monofunctional (meth) acrylic acid ester monomer is a compound having one (meth) acryloyl group. The polyfunctional (meth) acrylic acid ester monomer is a compound having two or more (meth) acryloyl groups.
The monofunctional (meth) acrylamide-based monomer refers to a (meth) acrylamide compound having one (meth) acryloyl group.
The content of the polyfunctional (meth) acrylic acid ester monomer is preferably 6 to 50% by mass, more preferably 20 to 50% by mass, and even more preferably 30 to 45% by mass, in 100% by mass of the polymerizable organic compound component. Specifically, the content is, for example, 6, 10, 15, 20, 25, 30, 35, 40, 45, 50% by mass, and may be in the range between the two values exemplified herein.
The monofunctional (meth) acrylic acid ester monomer preferably contains a monofunctional (meth) acrylic acid ester monomer having a cyclic structure (a first cyclic structure). The first cyclic structure is, for example, a cyclic structure having a polycyclic structure or an alicyclic hydrocarbon group, and preferably a cyclic structure having a polycyclic structure and a saturated hydrocarbon group. Further, a monofunctional (meth) acrylic acid ester monomer preferably does not have all of an ether bond, an aromatic ring, and heteroatoms other than an oxygen, and more preferably does not have any of an ether bond, an aromatic ring, and heteroatoms other than an oxygen.
The acrylic equivalent of the monofunctional (meth) acrylic acid ester monomer is preferably 160 to 250, more preferably 180 to 220, and even more preferably 200 to 215. The acrylic equivalent of the monofunctional (meth) acrylic acid ester monomer is a value obtained by dividing the molecular weight of the monofunctional (meth) acrylic acid ester monomer by the number of functional groups of the (meth) acryloyl group.
The molecular weight of the monofunctional (meth) acrylic acid ester monomer is preferably 160 to 250, more preferably 180 to 220, and even more preferably 200 to 215.
Examples of monofunctional (meth) acrylic acid ester monomers include:

acyclic aliphatic (meth) acrylates such as methyl (meth) acrylate, ethyl (meth) acrylate, n-butyl (meth) acrylate, iso-butyl (meth) acrylate, t-butyl (meth) acrylate, 2-ethylhexyl (meth) acrylate, nonyl (meth) acrylate, tridecyl (meth) acrylate, hexadecyl (meth) acrylate, octadecyl (meth) acrylate, isoamyl (meth) acrylate, isodecyl (meth) acrylate, isostearyl (meth) acrylate, and lauryl (meth) acrylate;
aromatic (meth) acrylates such as benzyl (meth) acrylate, nonylphenoxyethyl (meth) acrylate, 2-hydroxy-3-phenoxypropyl (meth) acrylate, nonylphenoxyethyl tetrahydrofurfuryl (meth) acrylate, and phenoxyethyl (meth) acrylate;
alicyclic (meth) acrylates such as dicyclopentenyl (meth) acrylate, dicyclopentanyl (meth) acrylate, dicyclopentenyloxyethyl (meth) acrylate, tetracyclododecanyl (meth) acrylate, cyclohexyl (meth) acrylate, isobomyl (meth) acrylate, norbornyl (meth) acrylate, adamantan-1-yl (meth) acrylate, and 2- (meth) acryloyloxymethyl-2-methyladamantan;
hydroxyalkyl (meth) acrylates such as 2-hydroxyethyl (meth) acrylate, 2-hydroxypropyl (meth) acrylate, 4-hydroxybutyl (meth) acrylate, and 3-chloro-2-hydroxypropyl (meth) acrylate;
(meth) acrylic acids such as ethoxyethoxyethyl (meth) acrylate, methoxyethyl (meth) acrylate, butoxyethyl (meth) acrylate, tetrahydrofurfuryl (meth) acrylate, glycidyl (meth) acrylate, caprolactone-modified tetrahydrofurfuryl (meth) acrylate, 4-t- butylcyclohexyl (meth) acrylate, and urethane mono (meth) acrylate, and (meth) acrylic acid.

Among alicyclic (meth) acrylates, alicyclic (meth) acrylic acid ester is preferable. Among alicyclic (meth) acrylic acid esters, one or more selected from the group consisting of dicyclopentanyl (meth) acrylate, tetracyclododecanyl (meth) acrylate, isobomyl (meth) acrylate, norbornyl (meth) acrylate, and adamantane-1-yl (meth) acrylate is preferable.
Among these, one or more of selected from the group consisting of an acyclic aliphatic (meth) acrylic acid ester and an alicyclic (meth) acrylic acid ester is preferable, and an alicyclic (meth) acrylic acid ester is more preferable.
Isobornyl (meth) acrylate is preferable from the viewpoint of availability and glass transition temperature and the like.
These can be used alone, or two or more of these can be used in combination.
The monofunctional (meth) acrylamide-based monomer preferably contains a monofunctional (meth) acrylamide-based monomer having a cyclic structure (a second cyclic structure). The second cyclic structure is, for example, a heterocyclic ring, preferably a cyclic structure having a hetero atom such as an oxygen atom, a nitrogen atom, and the like. The second cyclic structure is preferably, according to one embodiment, a cyclic structure not having an aromatic ring. Specifically, the second cyclic structure is, for example, a cyclic structure having a morpholine skeleton, a pyrrolidine skeleton and the like.
The acrylic equivalent of the monofunctional (meth) acrylamide-based monomer is preferably 100 to 200, more preferably 120 to 180, and even more preferably 130 to 160. The acrylic equivalent of the monofunctional (meth) acrylamide-based monomer is a value obtained by dividing the molecular weight of the monofunctional (meth) acrylamide-based monomer by the number of functional groups of the (meth) acryloyl group.
The molecular weight of the monofunctional (meth) acrylamide-based monomer is preferably 100 to 200, more preferably 120 to 180, and even more preferably 130 to 160.
Examples of the monofunctional (meth) acrylamide-based monomer include (meth) acryloylmorpholine, dimethyl (meth) acrylamide, diethyl (meth) acrylamide, hydroxyethyl (meth) acrylamide, isopropyl (meth) acrylamide, dimethylaminopropyl (meth) acrylamide and N- (meth) acryloyloxyethyl hexahydrophthalimide. From the viewpoint of availability, glass transition temperature, and the like, at least one from the group of (meth) acryloylmorpholin or N- (meth) acryloyloxyethyl hexahydrophthalimide is preferable, and (meth) acryloylmorpholin is particularly preferable.

These can be used alone, or two or more of these can be used in combination.

The polyfunctional (meth) acrylic acid ester monomer preferably contains a polyfunctional (meth) acrylic acid ester monomer having a cyclic structure (a third cyclic structure). The third cyclic structure is, for example, a cyclic structure having a polycyclic structure or an alicyclic hydrocarbon group, more preferably a cyclic structure having a polycyclic structure and a saturated hydrocarbon group. Further, a polyfunctional (meth) acrylic acid ester monomer preferably does not have all of an ether bond, an aromatic ring, and heteroatoms other than an oxygen, and more preferably does not have any of an ether bond, an aromatic ring, and heteroatoms other than an oxygen. From another point of view, the polyfunctional (meth) acrylic acid ester monomer is preferably a bifunctional (meth) acrylic acid ester monomer.

Examples of the polyfunctional (meth) acrylic acid ester monomer include a bifunctional (meth) acrylic acid ester monomer, a trifunctional (meth) acrylic acid ester monomer, and a tetrafunctional or higher functional (meth) acrylic acid ester monomer.

The acrylic equivalent of the polyfunctional (meth) acrylic acid ester monomer is preferably 80 to200, more preferably 100 to 180, and even more preferably 120 to 160. The acrylic equivalent of the polyfunctional (meth) acrylic acid ester monomer is a value obtained by dividing the molecular weight of the polyfunctional (meth) acrylic acid ester monomer by the number of functional groups of the (meth) acryloyl group.

The molecular weight of the polyfunctional (meth) acrylic acid ester monomer is preferably 200 to 2000, more preferably 250 to 1500, and even more preferably 280 to 1000.

Examples of the bifunctional (meth) acrylic acid ester monomer include:

alicyclic di (meth) acrylic acid ester monomers such as 1,3-adamantane dimethanol di (meth) acrylate, tricyclodecane dimethanol di (meth) acrylate;
alcan diol di (meth) acrylic acid ester monomers such as 1,3-butanediol di (meth) acrylate, 1,4-butanediol di (meth) acrylate, 1,6-hexadioldi (meth) acrylate, 1,9-nonanediol di (meth) acrylate, and 1,10-decanediol di (meth) acrylate;
di (meth) acrylic acid ester monomers having a neopentyl glycol structure such as neopentyl glycol di (meth) acrylate and neopentyl glycol-modified trimethylolpropane di (meth) acrylate;
(poly) alkylene glycol di (meth) acrylic acid ester monomers such as tetramethylene glycol di (meth) acrylate, diethylene glycol di (meth) acrylate, triethylene glycol di (meth) acrylate, tetraethylene glycol di (meth) acrylate, polyethylene glycol di (meth) acrylate, propylene glycol di (meth) acrylate, dipropylene glycol di (meth) acrylate, tripropylene glycol di (meth) acrylate, polypropylene glycol di (meth) acrylate;
di (meth) acrylic acid ester monomers having a bisphenol structure such as 2,2-bis (4- (meth) acryloxidiethoxyphenyl) propane, 2,2-bis (4- (meth) acryloxipropoxyphenyl) propane, 2,2-bis (4-(meth) acryloxy) tetraethoxyphenyl propane;
stearic acid-modified pentaeristoldi (meth) acrylate, isocyanuric acid ethylene oxide-modified di (meth) acrylate, and diglycerin EO (ethylene oxide) -modified di (meth) acrylate.

Examples of the trifunctional (meth) acrylic acid ester monomer include isocyanurate ethylene oxide-modified tri (meth) acrylate, pentaerythritol tri (meth) acrylate, trimethylolpropane tri (meth) acrylate, and tris [(meth) acryloixi ethyl] isocyanurate and the like.

Examples of the tetrafunctional or higher functional (meth) acrylic acid ester monomer include ditrimethylolpropane tetra (meth) acrylate, dimethylolpropanetetra (meth) acrylate, pentaerythritol tetra (meth) acrylate, and pentaerythritol ethoxytetra (meth) acrylate, dipentaerythritol penta (meth) acrylate, dipentaerythritol hexa (meth) acrylate and the like.

The polymerizable organic compound component preferably contains a urethane (meth) acrylate oligomer. The urethane (meth) acrylate oligomer has at least one urethane bond and at least one (meth) acrylate group in the molecule. By containing the urethane (meth) acrylate oligomer, the toughness of the modeled object obtained after modeling can be improved. Further, the addition of the urethane (meth) acrylate oligomer is preferable from the viewpoint of curing shrinkage in modeling and can contribute to the bending strength of the modeled object by stress relaxation in a low temperature region.

The urethane (meth) acrylate oligomer is preferably a polyfunctional urethane (meth) acrylate oligomer. The polyfunctional urethane (meth) acrylate oligomer is preferably a bifunctional or higher functional urethane (meth) acrylate oligomer, more preferably a 2 to 15 functional urethane (meth) acrylate oligomer, and further preferably a 2 to 6 functional urethane, most preferably a bifunctional urethane (meth) acrylate oligomer.

Examples of the urethane (meth) acrylate oligomer preferably do not include the polyfunctional (meth) acrylic acid ester monomer described above. The polyfunctional (meth) acrylic acid ester monomer described above preferably

does not include an urethane (meth) acrylate oligomer.

The urethane (meth) acrylate oligomer is composed of an active hydrogen group-containing polyol component (a), a diisocyanate component (b), and an active hydrogen group-containing (meth) acrylic component (c).

Examples of the component (a) include polyethylene glycol, polypropylene glycol, polytetramethylene glycol, ethylene oxide-modified bisphenol, propylene oxide-modified bisphenol, polyglycol obtained by copolymerization of ethylene oxide and propylene oxide, polyester polyol, polycarbonate polyol, polybutadiene polyol. These can be used alone, or two or more of these can be used in combination.

Examples of the component (b) is, for example, tolylene diisocyanate, xylylene diisocyanate, diphenylmethane diisocyanate, hexamethylene diisocyanate, trimethylhexamethylene diisocyanate, tetramethylxylylene diisocyanate, isophorone diisocyanate, hydrogenated tolylene diisocyanate, hydrogenated xylylene diisocyanate and hydrogenated diphenylmethane diisocyanate. These can be used alone, or two or more of these can be used in combination.

Examples of the component (c) include hydroxyalkyl (meth) acrylates such as 2-hydroxyethyl (meth) acrylate, 2-hydroxypropyl (meth) acrylate, 4-hydroxybutyl (meth) acrylate, pentaerythritol triacrylate, pentaerythritol tri (meth) acrylate. These can be used alone, or two or more of these can be used in combination.

Here, the urethane (meth) acrylate oligomer may be obtained, for example, by reacting the active hydrogen group-containing polyol component (a), the diisocyanate component (b), and the active hydrogen group-containing (meth) acrylic component (c) (for example, a polycondensation reaction).

The weight average molecular weight of the urethane (meth) acrylate oligomer is preferably 1000 to 60,000, more preferably 3000 to 40,000, and most preferably 5000 to 10000. The weight average molecular weight is preferably determined by preparing a calibration curve with commercially available standard polystyrene using tetrahydrofuran as a solvent and using a GPC system (SC-8010 manufactured by Tosoh Corporation) under the following conditions.

Flow velocity: 1.0 ml/min
Set temperature: 40°C
Column configuration:

"TSK guardcolum MP (xL)" 6.0 mm ID x 4.0 cm 1 piece manufactured by Tosoh Corporation
"TSK-GELMULTIPOREHXL-M" 7.8 mm ID x 30.0 cm (16,000 of theoretical plates) 2 pieces manufactured by Tosoh Corporation
3 pieces in total (32,000 of theoretical plates as a whole)
Sample injection volume: 100 μl (sample solution concentration 1 mg/ml)
Liquid transfer pressure: 39 kg/cm2
Detector: RI detector

When the polymerizable organic compound component contains the monofunctional (meth) acrylamide-based monomer, the polyfunctional (meth) acrylic acid ester monomer, and the urethane (meth) acrylate oligomer, the content of the monofunctional (meth) acrylamide-based monomer is preferably 30 to 70% by mass, more preferably 40 to 60% by mass, and further preferably 45 to 65% by mass in100% by mass of the polymerizable organic compound component.

When the polymerizable organic compound component contains the monofunctional (meth) acrylamide-based monomer, the polyfunctional (meth) acrylic acid ester monomer, and the urethane (meth) acrylate oligomer, the content of the polyfunctional (meth) acrylic acid ester monomer is preferably 20 to 60% by mass, more preferably 30 to 50% by mass, and further preferably 35 to 45% by mass in 100% by mass of the polymerizable organic compound component.

When the polymerizable organic compound component contains the monofunctional (meth) acrylamide-based monomer, the polyfunctional (meth) acrylic acid ester monomer, and the urethane (meth) acrylate oligomer, the content of the urethane (meth) acrylate oligomer is preferably 0.1 to 30% by mass, more preferably 1 to 20% by mass, and further preferably 5 to 15% by mass in 100% by mass of the polymerizable organic compound component.

Further, the polymerizable organic compound component may contain a monomer such as another vinyl compound or an epoxy compound as long as the effect of the present invention is not impaired.

Examples of the vinyl compound include vinylpyrrolidone, N-vinylformamide and the like.

<Photopolymerization initiator>

Examples of the photopolymerization initiator include benzophenone and its derivatives, benzyl and its derivatives, anthraquinone and its derivatives, benzoin, benzoin derivatives such as benzoin methyl ether, benzoin ethyl ether, benzoin propyl ether, benzoin isobutyl ether, benzyl dimethyl ketal, acetphenone derivatives such as diethoxyacetophenone and 4-t-butyltrichloroacetophenone , 2-dimethylaminoethylbenzoate, p-dimethylaminoethylbenzoate, diphenyldisulfide, thioxanthone and its derivatives, camphorquinone, camphorquinone derivatives such as 7,7-dimethyl-2,3-di oxobicyclo [2.2.1] heptane-1-carboxylic acid, 7,7-dimethyl-2,3-dioxobicyclo [2.2.1] heptane-1-carboxy-2-bromoethyl ester, 7, 7-dimethyl-2,3-dioxobicyclo [2.2.1] heptane-1-carboxy-2-methyl ester, 7,7-dimethyl-2,3-dioxobicyclo [2.2.1] heptane -1-carboxylic acid chloride , 2-methyl-1- [4- (methylthio) phenyl] -2-morpholinopropane-1-one, α-aminoalkylphenone derivatives such as 2-benzyl-2-dimethylamino-1- (4-mophorinophenyl) -butanone-1 , acylphosphine oxide derivatives such as benzoyldiphenylphosphine oxide, 2,4,6-trimethylbenzoyldiphenylphosphine oxide, benzoyldiethoxyposphine oxide, 2,4,6-trimethylbenzoyl dimethoxyphenylphosphine oxide, 2,4,6-trimethylbenzoyl diethoxyphenylphosphine oxide, phenylbis (2,4,6-trimethylbenzoyl) phosphine oxide, oxy-phenyl- acetic acid 2- [2-oxo-2-phenyl-acetoxy-ethoxy] -ethyl ester, and oxy-phenyl- acetic acid 2-[2-hydroxy-ethoxy] -ethyl ester and the like. Among these, acylphosphine oxide derivatives are preferable from the viewpoint of molding speed, and phenylbis (2,4,6-trimethylbenzoyl) phosphine oxide is particularly preferable.

The content of the photopolymerization initiator is preferably 0.5 to 10 parts by mass, and more preferably 1 to 7 parts by mass with respect to 100 parts by mass of the polymerizable organic compound component. Within such a range, a sufficient curing rate can be obtained and storage stability is also good.

<Dye>

The photocurable resin composition according to one embodiment of the present invention may contain a dye. The dye is preferably an organic dye. The organic dye preferably has the cyclic structure(a fourth cyclic structure). The fourth cyclic structure is preferably an aromatic ring.

If a radical trapping ability is too high, the influence on the polymerization reaction will be large, so the fourth cyclic structure preferably does not have a nitrogen atom(does not have a nitrogen atom as an ring-forming atom). Further, according to one embodiment, the fourth cyclic structure preferably have neither a nitrogen atom nor a sulfur atom. Examples of the fourth cyclic structure include, an aromatic ring, preferably an aromatic ring not having a hetero atom in the cyclic skeleton.

The fourth cyclic structure is preferably a polycyclic structure, specifically, for example, a structure containing anthraquinone or its derivative in its skeleton. An organic dye having a structure containing anthraquinone and its derivative in its skeleton as the fourth cyclic structure is, for example, a compound represented by the following general formula (1).

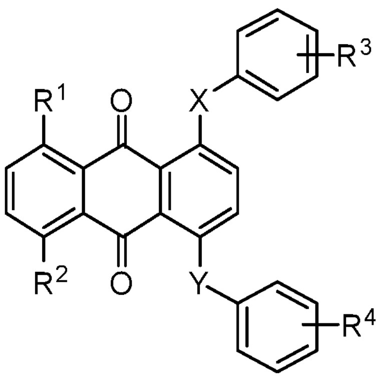

(1)

Each of $R^1$ and $R^2$ is independently a hydrogen atom, a hydroxyl group, or a monovalent organic group, preferably a hydrogen atom or a hydroxyl group.

Each of X and Y is independently an oxygen atom (-O-), a sulfur atom (-S-) or a nitrogen atom (-NH-), preferably a nitrogen atom (-NH-).

Each of $R^3$ and $R^4$ is independently a hydrogen atom, a hydroxyl group, or an alkyl group having 1 to 10 carbon atoms. An aromatic ring to which $R^3$ and $R^4$ are bonded may each have a plurality of $R^3$ and $R^4$.

More specifically, the organic dye is, for example, a compound represented by the following structural formula (2) or (3).

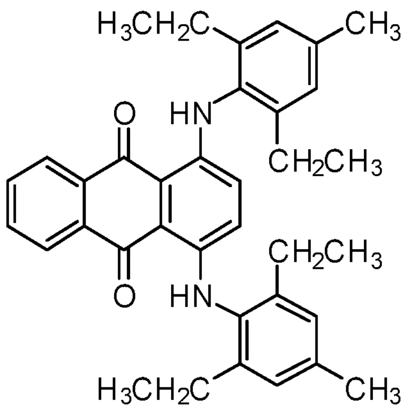

(2)

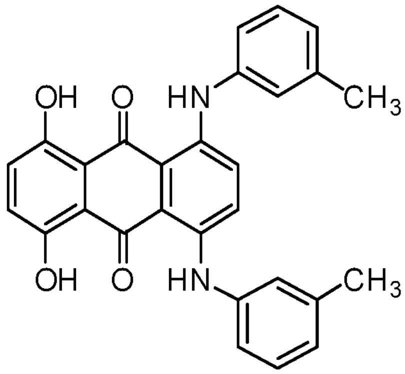

(3)

The content of the dye is preferably 0.001 to 1.0 parts by mass, and more preferably 0.03 to 0.8 parts by mass, and most preferably 0.05 to 0.5parts by mass with respect to 100 parts by mass of the polymerizable organic compound component. Specifically, the content of the dye is, for example, 0.001, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1.0 parts by mass with respect to 100 parts by mass of the polymerizable organic compound component, and may be in the range between the two values exemplified herein. Within such a range, a sufficient curing rate can be obtained and storage stability is also good.

<Other additives>

If desired, in addition to the above components, the photocurable resin composition according to one embodiment of the present invention may include additives, for example, a known substance such as a curing accelerator, a chain transfer agent, a thickener, a filler, a plasticizer, a rust preventive, and the like, as long as the physical characteristics of the present invention are satisfied.

Examples of the curing accelerator include those containing a nitrogen atom. Among these, a tertiary amine having an alkyl group and the like are preferable, and specific examples thereof include dimethyl palmitylamine. The content of the curing accelerator is preferably 0.1 to 10 parts by mass, and more preferably 0.3 to 7 parts by mass with respect to 100 parts by mass of the polymerizable organic compound component.

Other additives include an organic phosphine. The organic phosphine preferably does not contain a photopolymerization initiator. Among organic phosphines, those having a skeleton in which three organic groups are bonded to a phosphorus atom are preferred. As the organic group, an aromatic group is preferable. As the organic phosphine, triphenylphosphine is preferred.

The content of the organic phosphine is preferably 0.001 to 1.0 parts by mass, more preferably 0.02 to 0.8 parts by mass, most preferably 0.03 to 0.5 parts by mass with respect to 100 parts by mass of the polymerizable organic compound component. Within such a range, a sufficient curing rate can be obtained and storage stability is also good.

<Transmittance>

In the photocurable resin composition according to one embodiment of the present invention, a light transmittance at a wavelength of 405 nm of a cured product with an average thickness of 100 μm is 24% or less, preferably

23% or less, and the cured product is cured by irradiating the photocurable resin composition with a light having a light intensity of 1.7 $mW/cm^2$ and an irradiation amount of 7.65 $mJ/cm^2$. Due to manufacturing difficulties, the light transmittance is preferably 1% or more, more preferably 10% or more.

2. Method for producing a three-dimensional modeled object

The photocurable resin composition according to one embodiment of the present invention can be applied to various three-dimensional modeling methods for polymerizing by light irradiation and modeling. The photocurable resin composition of the present invention is preferably used in a surface exposure method, particularly in which light is irradiated from below.

The method for producing the three-dimensional modeled object according to one embodiment of the present invention comprises a step of irradiating the above photocurable resin composition. The photocurable resin composition is curd by light irradiation to obtain a photocured product, which becomes a three-dimensional modeled object.

The method for producing the three-dimensional modeled object according to one embodiment of the present invention will be described in more detail with reference to Fig. 1. The method comprises a step of irradiating at least a part of the photocurable resin composition 3 between a modeling substrate 5 and a model film 7 to form a cured layer.

Preferably, irradiating is irradiating by a surface exposure method, in which the light is more preferably irradiated from below.

Preferably, the method for producing further includes a step of moving the modeling substrate 5 or the modeling film 7 in the vertical direction.

Preferably, for peeling off the modeled object from the modeling film 7 and for moving to the light irradiation position of the next layer, the moving in the vertical direction is performed. In the moving for peeling, it may rise by the distance equal to or longer than the distance required for moving to the light irradiation position of the next layer and then return (descend) to the light irradiation position of the next layer to proceed to model.

Preferably, the method for producing the three-dimensional modeled object further includes a step of filling with the photocurable resin composition 3.

Preferably, the step of taking out the modeled object from the modeling apparatus 1, cleaning the modeled object, and irradiating the modeled object with a light to further cure is included.

## EXAMPLES

Hereinafter, the present invention will be described in more detail with reference to examples. Moreover, these are merely examples and do not limit the present invention.

[Example 1]

To prepare a photocurable resin composition, 50g of acryloylmorpholine (ACMO: manufactured by KJ Chemicals Corporation, molecular weight: 141.17, acrylic equivalent: 141.17), 40g of tricyclodecanedimethanol diacrylate (A-DCP: manufactured by SHIN-NAKAMURA CHEMICAL Co., Ltd., molecular weight: 304.38, acrylic equivalent: 152.19), 10g of urethane acrylate (Polyether-based bifunctional urethane acrylate has a weight average molecular weight of 6500. A polyol compound is polypropylene glycol. An organic polyisocyanate compound is isophorone diisocyanate. Hydroxy (meth) acrylate is 2-hydroxyethyl acrylate.), 4g of phenylbis (2,4,6-trimethylbenzoyl) phosphine oxide (I-819: manufactured by IGM Resins B.V.), 0.5g of dimethyl palmityl amine (DM6098: manufactured by Kao Corporation), 50 mg of triphenylphosphine and 50 mg of the dye of the above structural formula (2) (Macrolex Blue: manufactured by LANXESS) were mixed.

<Measurement of transmittance>

The photocurable resin composition coated on the substrate was irradiated with light having a wavelength of 405 nm and an illuminance of 1.7 mW/cm for 4.5 seconds (irradiation amount of 7.65 $mJ/cm^2$) to form a 45 mm long x 25 mm wide x 100 $\mu$m thick film. A test piece was prepared. Then, using a spectrophotometer "SolidSpec-3700" manufactured by SHIMADZU CORPORATION, the absorbance a at a wavelength of 405 nm in the thickness direction of the test piece separated from the substrate was measured. The sampling pitch was 1.0 nm, and an integrating sphere was used as a detector.

The actual thickness b of the test piece was measured with a digital caliper "MDC-25MX" manufactured by Mitutoyo Corporation, and the transmittance T of light with a wavelength of 405 nm per 100 $\mu$m thickness was obtained by the following formula (3).

$$T\,[\%] = 10^{-a \times 100/b\,[nm]} \times 100 \qquad (3)$$

Table 1 shows the measurement results.

<Evaluation>

Using the obtained photocurable resin composition, an evaluation model was actually modeled and its formability and overhang were evaluated. Using a modeling apparatus (ML-48: manufactured by MUTOH INDUSTRIES LTD.), modeling was performed under the conditions of a laminated thickness of 25 μm, and an irradiation time of 1.3 seconds/layer. As the evaluation model, evaluation model M1 shown in Fig. 2 was used.
Fig. 3A is an enlarged view of a part of the formability evaluation model M1 viewed from a direction perpendicular to the molding direction. Fig. 3B is a cross-sectional view taken along line B-B in Fig. 3A. The dimensions of each part are as follows. Note that the height of the cylinder S is d2, and the diameter is d5.

d1 = 1.0 mm
d2 = 3.0 mm
d3 = 3.0 mm
d4 = 5.0 mm
d5 = 1.0 mm

In the present specification, the occurrence of a non-designed hardened area on the opposite side of the light irradiation surface of the modeled object in three-dimensional modeling or the non-designed hardened area may be referred to as "overhang".

(Formability)

Using the obtained photocurable resin composition, an evaluation model was actually modeled and its formability and overhang were evaluated. Using a modeling apparatus (ML-48: manufactured by MUTOH INDUSTRIES LTD.), modeling was performed under the conditions of a laminated thickness of 25 μm, and an irradiation time of 1.3 seconds/layer. As the evaluation model, evaluation model M1 shown in Fig. 2 was used.
Those in which the molded object fell off during the process due to insufficient curing or could not be molded according to the model were marked as B, and those that could be molded in the shape according to the model were marked as A.

(Overhang)

Regarding the three-dimensional model obtained by modeling the above evaluation model M1, as shown in Fig 3 and 4, the extent to which the non-designed hardened area 13 were generated on the opposite side F (Fig. 3A) of the light irradiation surface of the modeling object 11 was measured. That is, the height H (μm) of the non-designed hardened area 13 generated on the upper surface of the modeled object 11 was measured. Table 1 shows the measurement results.

[Example 2 to 5 and Comparative Example 1 to 6]

The photocurable resin composition was prepared according to the compositions shown in Table 1, and physical characteristics were measured and a molded modeling model was evaluated as in Example 1. In Comparative Example 3, a benzotriazole compound was added instead of dye, but it was difficult to perform curing and modeling.

- Dye

Macrolex Green: Manufactured by LANXESS (dye with the above structural formula (3))
Macrolex Red: Manufactured by LANXESS (dye with the above structural formula (4))

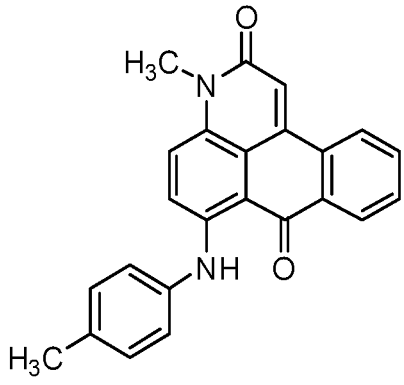

(4)

- Other additives

Tinuvin 928 "2-(2H-benzotriazol-2-yl)-6-(1-methyl-1-phenylethyl)-4-(1,1,3,3-tetramethylbutyl)phenol": Manufactured BASF Japan Ltd.

[Table 1]

| Table 1 | | | Example | | | | | Comparative Example | | | | | |
|---|---|---|---|---|---|---|---|---|---|---|---|---|---|
| | | | 1 | 2 | 3 | 4 | 5 | 1 | 2 | 3 | 4 | 5 | 6 |
| Photocured resin | Isobornyl (meth) acrylate | Mass[g] | 0 | 0 | 0 | 55 | 0 | 0 | 0 | 0 | 0 | 55 | 55 |
| | Acryloylmorpholine | Mass[g] | 50 | 50 | 50 | 0 | 50 | 50 | 50 | 50 | 50 | 0 | 0 |
| | Tricyclodecanedimethanol diacrylate | Mass[g] | 40 | 40 | 40 | 40 | 40 | 40 | 40 | 40 | 40 | 40 | 40 |
| | Urethane acrylate | Mass[g] | 10 | 10 | 10 | 5 | 10 | 10 | 10 | 10 | 10 | 5 | 5 |
| | Phenylbis (2,4,6-trimethylbenzoyl) phosphine oxide | Mass[g] | 4 | 4 | 4 | 4 | 4 | 4 | 4 | 4 | 4 | 4 | 4 |
| | Dimethyl palmityl | Mass[g] | 0.5 | 0.5 | 0.5 | 3 | 0.5 | 0.5 | 0.5 | 0.5 | 0.5 | 3 | 3 |
| | Triphenylphosphine | Mass[mg] | 50 | 50 | 50 | 50 | 0 | 50 | 50 | 50 | 50 | 50 | 50 |
| | MacrolexBlue | Mass[mg] | 50 | 100 | 0 | 500 | 100 | 0 | 0 | 0 | 0 | 0 | 100 |
| | MacrolexGreen | Mass[mg] | 0 | 0 | 100 | 0 | 0 | 0 | 10 | 0 | 0 | 0 | 0 |
| | MacrolexRed | Mass[mg] | 0 | 0 | 0 | 0 | 0 | 0 | 0 | 10 | 0 | 0 | 0 |
| | Tinuvin 928 | Mass[mg] | 0 | 0 | 0 | 0 | 0 | 0 | 0 | 0 | 1000 | 0 | 0 |
| Physical characteristics | Transmittance of light with a wavelength of 405 nm | [%] / 100μm | 23 | 23 | 22 | 22 | 23 | 26 | 31 | - | 32 | 32 | 27 |
| Evaluation | Formability | - | A | A | A | A | A | A | A | B | A | A | A |
| | Overhang | [μm] | 127 | 126 | 115 | 103 | 129 | 232 | 208 | - | 269 | 244 | 208 |

In Comparative Example 3, since it was difficult to perform curing and modeling, "transmittance of light with a wavelength of 405 nm" and "overhang" were not measured.

**Reference List**

1: modeling apparatus 3: composition, 5: modeling substrate, 7: modeling film, 9: cured layer, 11: modeled object
13: non-designed hardened area
L: light, M1: evaluation model

## Claims

1. A photocurable resin composition, comprising a polymerizable organic compound component and a photopolymerization initiator,
wherein a light transmittance at a wavelength of 405 nm of a cured product with an average thickness of 100 μm is 24% or less, and the cured product is cured by irradiating the photocurable resin composition with a light having a light intensity of 1.7 $mW/cm^2$ and an irradiation amount of 7.65 $mJ/cm^2$.

2. The photocurable resin composition of Claim 1, wherein the polymerizable organic compound component comprises:

   at least one selected from a group of a monofunctional (meth) acrylic acid ester monomer and a monofunctional (meth) acrylamide-based monomer; and
   a polyfunctional (meth) acrylic acid ester monomer.

3. The photocurable resin composition of Claim 2, wherein a content of the polyfunctional (meth) acrylic acid ester monomer is 6 to 50% by mass in 100% by mass of the polymerizable organic compound component.

4. The photocurable resin composition of Claim 2, wherein the monofunctional (meth) acrylic acid ester monomer contains a monofunctional (meth) acrylic acid ester monomer having a first cyclic structure.

5. The photocurable resin composition of Claim 2, wherein the monofunctional (meth) acrylamide-based monomer contains a monofunctional (meth) acrylamide-based monomer having a second cyclic structure.

6. The photocurable resin composition of Claim 2, wherein the polyfunctional (meth) acrylic acid ester monomer contains a polyfunctional (meth) acrylic acid ester monomer having a third cyclic structure.

7. The photocurable resin composition of Claim 2,
wherein:

   the monofunctional (meth) acrylic acid ester monomer contains a monofunctional (meth) acrylic acid ester monomer having a first cyclic structure,
   the monofunctional (meth) acrylamide-based monomer contains monofunctional (meth) acrylamide-based monomer having a second cyclic structure,
   the polyfunctional (meth) acrylic acid ester monomer contains the polyfunctional (meth) acrylic acid ester monomer having a third cyclic structure,
   the first cyclic structure is a polycyclic structure or an alicyclic hydrocarbon group,
   the second cyclic structure is a heterocyclic ring,
   the third cyclic structure is a polycyclic structure or an alicyclic hydrocarbon group.

8. The photocurable resin composition of Claim 1, which contains a urethane (meth) acrylate oligomer.

9. The photocurable resin composition of Claim 1, which contains a dye.

10. The photocurable resin composition of Claim 9, wherein the dye is an organic dye.

11. The photocurable resin composition of Claim 10, wherein the organic dye has a fourth cyclic structure.

**12.** The photocurable resin composition of Claim 11, wherein the fourth cyclic structure does not contain a nitrogen atom.

**13.** The photocured product of the photocurable resin composition of any one of Claims 1 to 12.

**14.** A method for producing a three-dimensional modeled object, comprising a step of irradiating the photocurable resin composition of any one of Claims 1 to 12 with a light.

Fig. 1A

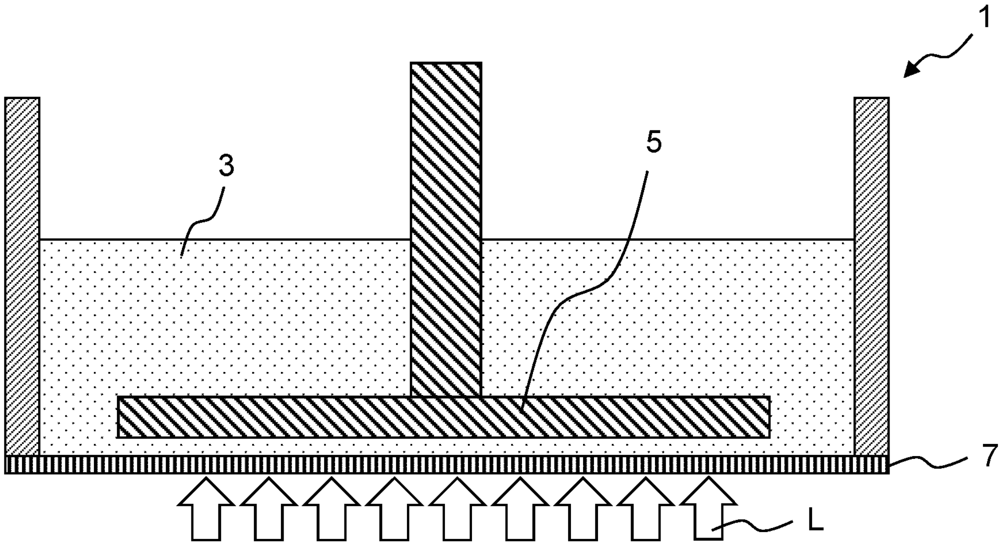


Fig. 1B

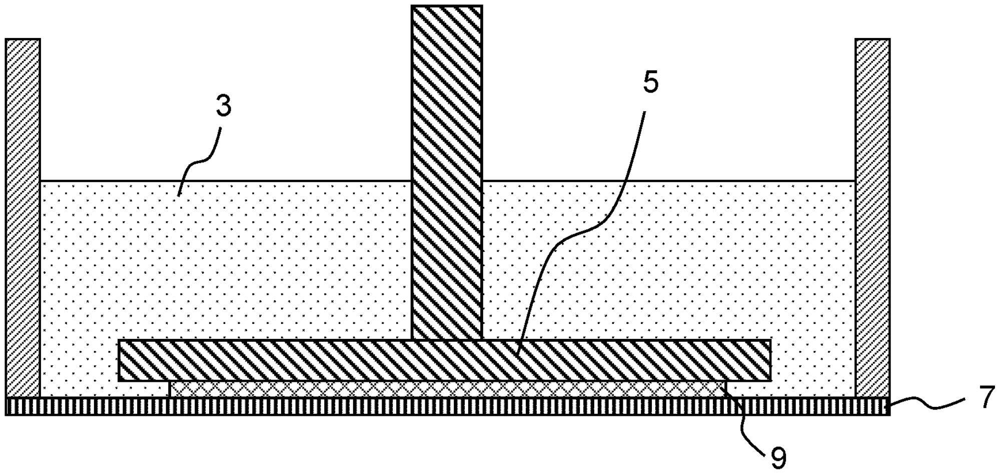


Fig. 1C

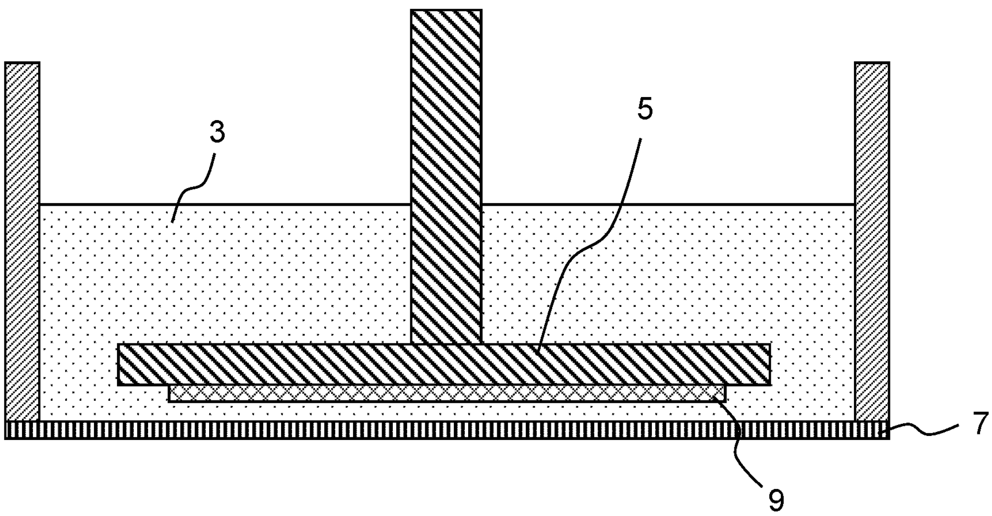

Fig. 2

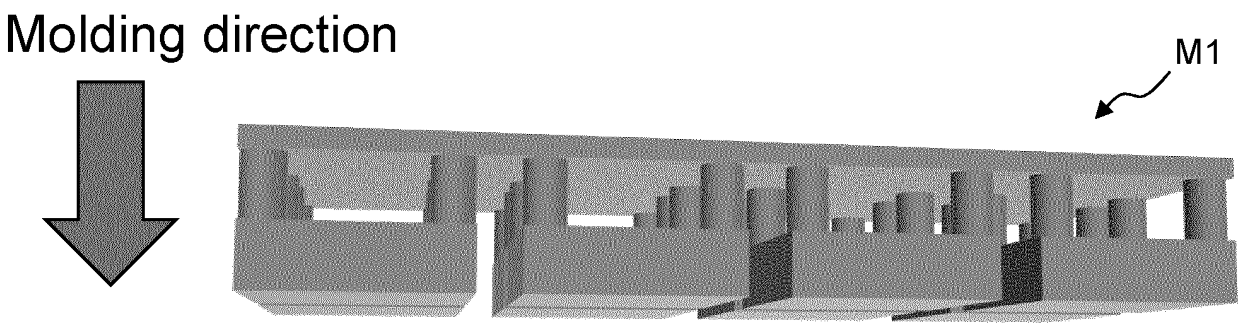

Fig. 3A

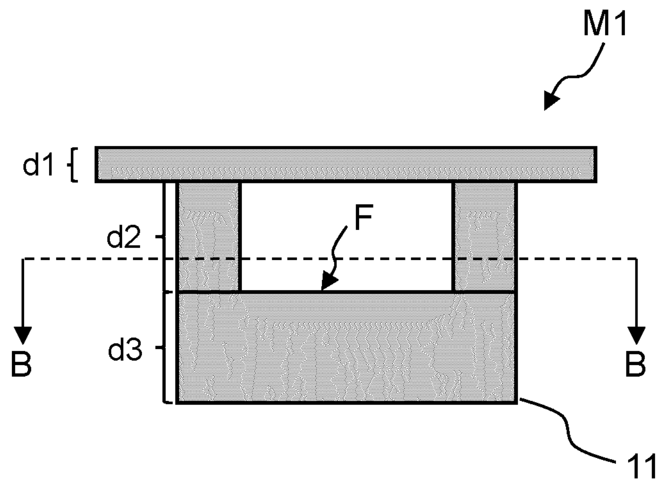


Fig. 3B

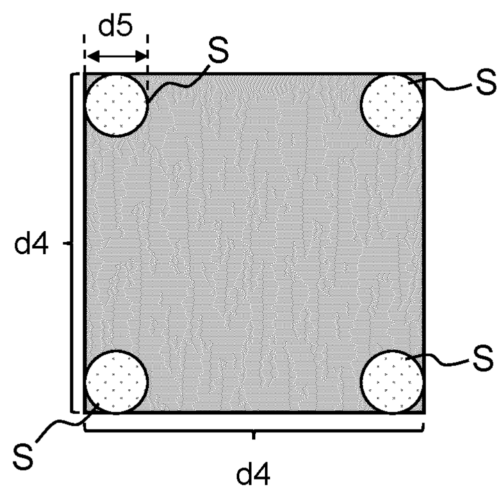

Fig. 4

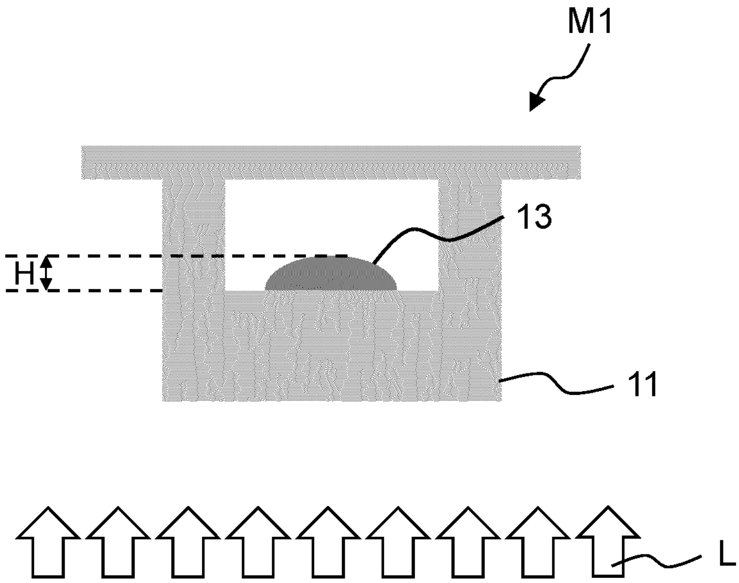

**INTERNATIONAL SEARCH REPORT**

International application No.
**PCT/JP2022/019129**

**A. CLASSIFICATION OF SUBJECT MATTER**

***C08F 2/50***(2006.01)i; ***B29C 64/124***(2017.01)i; ***B29C 64/264***(2017.01)i; ***B33Y 10/00***(2015.01)i; ***B33Y 70/00***(2020.01)i; ***C08F 2/44***(2006.01)i; ***C08F 290/06***(2006.01)i; ***C08G 18/64***(2006.01)i; ***C08L 101/00***(2006.01)i
FI: C08F2/50; C08F2/44 B; C08G18/64 015; C08L101/00; C08F290/06; B29C64/124; B29C64/264; B33Y10/00; B33Y70/00

According to International Patent Classification (IPC) or to both national classification and IPC

**B. FIELDS SEARCHED**

Minimum documentation searched (classification system followed by classification symbols)

C08F2/50; B29C64/124; B29C64/264; B33Y10/00; B33Y70/00; C08F2/44; C08F290/06; C08G18/64; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-59101 A (FUJI XEROX CO., LTD.) 18 April 2019 (2019-04-18) | 1-14 |
| A | JP 2015-038166 A (DENKI KAGAKU KOGYO KK) 26 February 2015 (2015-02-26) | 1-14 |
| A | JP 2019-81296 A (SEIKO EPSON CORP.) 30 May 2019 (2019-05-30) | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 June 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/019129**

| Patent document cited in search report | Publication date (day/month/year) | Patent family member(s) | Publication date (day/month/year) |
|---|---|---|---|
| JP 2019-59101 A | 18 April 2019 | (Family: none) | |
| JP 2015-038166 A | 26 February 2015 | (Family: none) | |
| JP 2019-81296 A | 30 May 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017210539 A